# EUROPEAN PATENT SPECIFICATION

(11) **EP 2 580 468 B1**
(45) Date of publication and mention of the grant of the patent: **01.11.2017**
(21) Application number: 11733823.6
(22) Date of filing: 04.07.2011
(51) Int. Cl.: F03D 1/00, B66C 1/00, E04H 12/08

(54) **A LIFTING AND GUIDING DEVICE FOR HANDLING WIND TURBINE TOWER SECTIONS**
EINE HEBE- UND FÜHRUNGSVORRICHTUNG ZUM UMGEHEN MIT TURMABSCHNITTE FÜR EINE WINDTURBINE
DISPOSITIF DE LEVAGE ET DE GUIDAGE POUR LA MANUTENTION DE SECTIONS DE TOUR D'ÉOLIENNE

(30) Priority: 13.07.2010 EP 10007201
(43) Date of publication of application: 17.04.2013
(73) Proprietor: Siemens Aktiengesellschaft, 80333 München (DE); Andresen Towers A/S, 5550 Langeskov (DK)
(72) Inventor: KJAER, Henning, DK-6800 Varde (DK); KRYGER, Arne, DK-5550 Langeskov (DK); LARSEN, Bent, Juul, DK-6855 Outrup (DK)
(74) Representative: Maier, Daniel Oliver
(86) International application number: PCT/EP2011/061227
(87) International publication number: WO 2012/007306

(56) References cited:
- WO-A1-2006/050723
- WO-A1-2007/125138
- DE-A1- 19 741 988
- US-A1- 2010 044 330
- US-B1- 6 357 549

## Description

The present invention relates to a lifting and guiding device for handling wind turbine tower sections, comprising a support part for being connected to a segment of a tower section and a rotatable part which is secured in position to the supporting part.

Common wind turbine towers, as known e.g. from WO 2004/083633 A1 are sectioned. Sectioning is mainly done in order to achieve manageable tower units, both in relation to transportation and lifting. A wind turbine tower comprises a number of cylindrical or tapered tower sections, whereby sections may be subdivided into two or more shell elements which are provided with flanges to allow for an interconnection of tower sections one on top of the other.

In order to even further increase the handiness of the tower sections it has been proposed in EP 2 006 471 A1 to further split each section into tower segments. Each tower section is divided into segments which are assembled by means of splice plate connections during installation. One advantage of this vertical segmentation is that the segments can be stacked during storage and transportation and therefore will not require as much space as tubular tower sections.

Similarly in WO 2009/097858 A1 a tower element is proposed which is made up of a number of segments with inwardly facing flanges at its longitudinal sides. The segments are connected by overlaps on the outer surface.

During storage, transportation and installation tower sections and segments are to be handled numerous times e.g. by some crane equipment. However, as the sections and segments normally are surface treated it may be difficult to connect the crane equipment directly to the sections or segments as the equipment may scratch the treated surface. Therefore special purpose lifting equipment has been proposed to solve this problem. In WO 02/04321 A2 a device for handling tower sections is disclosed. With this device a tower section can be handled as a container by using container brackets.

From WO 2008/000262 A1 a lifting equipment for handling a wind turbine component is known which can be adapted to a plurality of different wind turbine components during assembly of a wind turbine tower.

It is therefore an object of the present invention to provide a lifting and guiding device for handling wind turbine tower sections which ensures that tower segments or sections do not collide when they are installed in relation to each other.

According to the present invention this object is achieved in the above defined lifting and guiding device in that it comprises a support part for being connected to a segment of a tower section and a rotatable part which is secured in position to the support part.

The invention is based on the idea that scratches and other unwanted damages can be prevented when the inventive lifting and guiding device is used for handling wind turbine tower sections during installation. The inventive device ensures that a secure distance between a first segment and a second segment is kept so that the segments are saved from being scratched during installation.

It is preferred that the support part comprises circular or ovalized through holes for bolts for connecting the lifting and guiding device to said first segment. Several through holes may be present so that a lifting and guiding device can be used for different wind turbine tower sections or segments.

In the inventive lifting and guiding device it may be envisaged that said rotatable part is of a dimension that keeps a second segment at a predetermined distance from the first segment when the segments are approaching each other. Accordingly during installation it is prevented that the fist segment and the second segment touch each other incorrectly.

In this regard the rotatable part of the inventive lifting and guiding device being connected to the first segment may be substantially flush with the outer surface of the second segment. Accordingly both segments can be moved exactly axially and connected precisely.

In a preferred embodiment the inventive lifting and guiding device may have a curvature similar to the segment of a tower section where it is to be attached. This curvature enables to fix the device to a tower section. As an example the curvature can be angled or straight or circularly curved.

According to a further development of the invention the support part may comprise one or more areas which are suitable for being connected to a crane means, in particular a shackle, a hook or a chain for lifting the segment and the device. Consequently said crane means can be fixed easily in order to lift a tower section.

A very stable lifting and guiding device can be obtained when the rotatable part is attached at inwardly bent flanges of the device. The flanges may be bent perpendicular to a centre part and at least one rotatable part can be disposed at a flange.

It is particularly preferred that the inventive lifting and guiding device comprises two rotatable parts, which are preferably disposed on opposite bent flanges.

In order to optimise handling when sections or segments are connected the inventive lifting and guiding device may comprise an eye at its inner side. This eye may be used for various tasks such as a temporary attachment of a bag comprising bolts or for attachment of securing lines for personnel, tools or for attachment of a crane means for lifting the device itself.

The invention and its underlying principle will be better understood when consideration is given to the following description of a preferred embodiment.

In the accompanying drawings
- fig. 1 - 3: are perspective views of an embodiment of an inventive lifting and guiding device;
- fig. 4: is a perspective view of several lifting and guiding devices installed on a tower section; and
- fig. 5: shows the inventive lifting and guiding device in use.

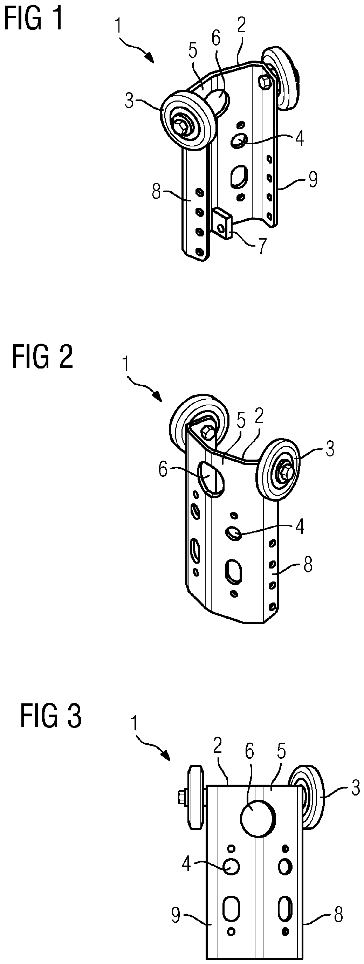

Fig. 1 - 3 show a lifting and guiding device 1 in a perspective view. The device 1 comprises a support part 2 for being connected to a first segment of a tower section and a rotatable part 3 which is secured in position to the support part 2. The lifting and guiding device 1 has a curvature similar to an area of a tower segment where it is to be attached. In the shown embodiment the support part 2 is angled.

The support part 2 comprises through holes 4 for allowing securing bolts (not shown) to enter and to be engaged with the segment of a wind turbine tower to which the device 1 is attached. Some through holes 4 are circular, other through holes are ovalized.

Further the lifting and guiding device 1 comprises an area 5 which is suitable for being connected to a crane means, in particular a shackle, a hook or a chain for lifting the whole assembly comprising the tower segment and the attached device 1. In the depicted embodiment the area 5 comprises a through hole 6 for inserting said crane means.

At the inner side of the lifting and guiding device 1 an "eye" 7 is provided which may be used for temporary attachment of a bag comprising bolts or nuts to be used when the bolted connection between tower sections or segments is established or for attachment of securing lines for personnel or tools.

The lifting and guiding device 1 comprises two inwardly bent flanges 8, 9, whereby each flange 8, 9 supports a rotatable part 3. In the shown embodiment the rotatable part 3 is a roller made of rubber. The rotatable parts 3 are arranged such that their axis is substantially parallel to the circumference of a tower section, i.e. the rollers are disposed perpendicular to said tower section.

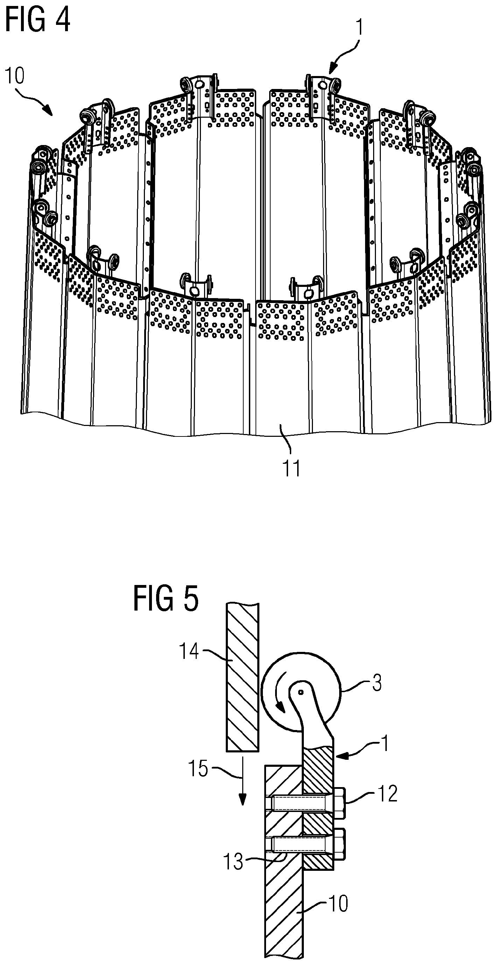

Fig. 4 shows a tower section with several lifting and guiding devices 1. The wind turbine tower section 10 comprises several angled segments 11 which are connected to neighbouring segments. The connection of two wind turbine tower sections 10 in longitudinal direction is realised by an overlap connection. During installation an upper tower section (not shown in fig. 4) is lowered in position in relation to the lower tower section 10. In order to avoid an unwanted collision between two sections whereby a surface treatment may be damaged or even the tower sections may be damaged several lifting and guiding devices 1 are attached at the upper end of wind turbine tower section 10. Due to the use of the lifting and guiding devices 1 the upper tower section can be lowered exactly axial so that both wind turbine tower sections can be connected exactly. When the upper tower section has been lowered to the right position a connection between the two tower sections is established by bolts and nuts. Subsequently the lifting and guiding devices 1 are no longer necessary and they may be removed from inside the tower section 10. The lifting and guiding devices 1 can be reused for another connection.

Fig. 5 is a sectional view and shows the lifting and guiding device during installation. The lifting and guiding device 1 comprising the rotatable part 3 is fixed to the lower wind turbine tower section 10 by bolts 12. These bolts 12 are inserted through through holes in the lifting and guiding device 1. Holes 13 in the tower section 10 are threaded so that a secure connection can be established.

In order to connect the lower tower section 10 and an upper tower section 14 an overlap connection is realised by lowering the upper tower section 14 in position in relation to the lower tower section 10 as indicated by arrow 15. As can be seen in fig. 5 the rotatable part 3 has a diameter so that it can ensure that the upper tower section 14 is kept at a secure distance from the lower tower section 10 when it is lowered. Therefore the rotatable part 3 is substantially flush with the outer surface of the lower tower section 10. When the upper tower section 14 is in contact with the rotatable part 3 the roller rolls along the outer surface of the upper tower section 14 thereby reducing friction and saving the upper tower section 14 from being scratched. Accordingly the lifting and guiding device 1 ensures that the tower sections 10, 14 are kept in a secure and correct distance during installation.

Although the present invention has been described in detail with reference to the preferred embodiment, the present invention is not limited by the disclosed examples from which the skilled person is able to derive other variations without departing from the scope of the invention.

### Reference numeral list

- 1: lifting and guiding device
- 2: support part
- 3: rotatable part
- 4: through hole
- 5: area
- 6: crane means
- 7: eye
- 8: flange
- 9: flange
- 10: tower section
- 11: segment
- 12: bolt
- 13: hole
- 14: tower section
- 15: arrow

## Claims

1. A lifting and guiding device (1) for handling wind turbine tower sections (10), comprising a one-piece plate-shaped support part (2) for being connected to a segment (11) of a tower section (10) and a rotatable part (3) which is secured in position to the support part (2), wherein rotatable part (3) comprises two rollers being attached oppositely at inwardly bent flanges (8, 9) of the support part (2).

2. A lifting and guiding device according to claim 1, **characterized in that** the support part (2) comprises circular or ovalized through holes (4) for bolts (12) for connecting the lifting and guiding device to said segment (11).

3. A lifting and guiding device according to any of the preceding claims, **characterized in that** said rotatable part (3) is of a dimension that it keeps a second tower section (14) at a predetermined distance from the first tower section (10) when the sections (10, 14) are approaching each other.

4. A lifting and guiding device according to any of the preceding claims, **characterized in that** the rotatable part being connected to said first segment (11) is substantially flush with the outer surface of the second segment.

5. A lifting and guiding device according to any of the preceding claims, **characterized in that** it has a curvature similar to the segment of a tower section where it is to be attached.

6. A lifting and guiding device according to claim 5, **characterized in that** it is angled or straight or circularly curved.

7. A lifting and guiding device according to any of the preceding claims, **characterized in that** the support part (2) comprises one or more areas which are suitable for being connected to a crane means, in particular a shackle, a hook or a chain for lifting the segment and the device.

8. A lifting and guiding device according to any of the preceding claims, **characterized in that** it comprises an eye (7) at its inner side.

## Patentansprüche

1. Hebe- und Führungsvorrichtung (1) zur Handhabung von Turmabschnitten (10) von Windenergieanlagen, welche einen einteiligen, plattenförmigen Stützteil (2), der dazu bestimmt ist, mit einem Segment (11) eines Turmabschnitts (10) verbunden zu werden, und einen drehbaren Teil (3), welcher in seiner Position bezüglich des Stützteils (2) fixiert ist, umfasst, wobei der drehbare Teil (3) zwei Rollen umfasst, die einander gegenüberliegend an einwärts gebogenen Flanschen (8, 9) des Stützteils (2) befestigt sind.

2. Hebe- und Führungsvorrichtung nach Anspruch 1, **dadurch gekennzeichnet, dass** der Stützteil (2) kreisförmige oder ovalisierte Durchgangslöcher (4) für Bolzen (12) zum Verbinden der Hebe- und Führungsvorrichtung mit dem Segment (11) umfasst.

3. Hebe- und Führungsvorrichtung nach einem der vorhergehenden Ansprüche, **dadurch gekennzeichnet, dass** der drehbare Teil (3) eine solche Abmessung aufweist, dass er einen zweiten Turmabschnitt (14) in einem vorbestimmten Abstand von dem ersten Turmabschnitt (10) hält, wenn sich die Abschnitte (10, 14) einander nähern.

4. Hebe- und Führungsvorrichtung nach einem der vorhergehenden Ansprüche, **dadurch gekennzeichnet, dass** der drehbare Teil, wenn er mit dem ersten Segment (11) verbunden ist, im Wesentlichen bündig mit der Außenfläche des zweiten Segments ist.

5. Hebe- und Führungsvorrichtung nach einem der vorhergehenden Ansprüche, **dadurch gekennzeichnet, dass** sie eine Krümmung aufweist, die ähnlich der des Segments eines Turmabschnitts ist, an dem sie befestigt werden soll.

6. Hebe- und Führungsvorrichtung nach Anspruch 5, **dadurch gekennzeichnet, dass** sie abgewinkelt oder gerade oder kreisförmig gekrümmt ist.

7. Hebe- und Führungsvorrichtung nach einem der vorhergehenden Ansprüche, **dadurch gekennzeichnet, dass** der Stützteil (2) einen oder mehrere Bereiche umfasst, welche geeignet sind, zum Heben des Segments und der Vorrichtung mit einem Kranmittel, insbesondere einem Schäkel, einem Haken oder einer Kette, verbunden zu werden.

8. Hebe- und Führungsvorrichtung nach einem der vorhergehenden Ansprüche, **dadurch gekennzeichnet, dass** sie eine Öse (7) an ihrer Innenseite umfasst.

## Revendications

1. Dispositif de levage et de guidage (1) destiné à la manutention de sections de mât d'éolienne (10), comprenant une partie de support en forme de plaque en une seule pièce (2) destinée à être raccordée à un segment (11) d'une section d'éolienne (10) et une partie rotative (3) qui est fixée en position sur la partie de support (2), dans lequel la partie rotative (3) comprend deux cylindres qui sont fixés en opposition au niveau de brides courbées vers l'intérieur (8, 9) de la partie de support (2).

2. Dispositif de levage et de guidage selon la revendication 1, **caractérisé en ce que** la partie de support (2) comprend des trous de passage circulaires ou ovalisés (4) pour des boulons (12) destinés à raccorder le dispositif de levage et de guidage audit segment (11).

3. Dispositif de levage et de guidage selon l'une quelconque des revendications précédentes, **caractérisé en ce que** ladite partie rotative (3) a une dimension qui fait qu'elle maintient une deuxième section de mât (14) à une distance prédéterminée par rapport à la première section de mât (10) lorsque les sections (10, 14) se rapprochent l'une de l'autre.

4. Dispositif de levage et de guidage selon l'une quelconque des revendications précédentes, **caractérisé en ce que** la partie rotative qui est raccordée audit premier segment (11) est sensiblement de niveau avec la surface externe du deuxième segment.

5. Dispositif de levage et de guidage selon l'une quelconque des revendications précédentes, **caractérisé en ce qu'**il a une courbure similaire au segment d'une section de mât à l'endroit où il est censé être fixé.

6. Dispositif de levage et de guidage selon la revendication 5, **caractérisé en ce qu'**il est angulaire ou droit ou a une courbure circulaire.

7. Dispositif de levage et de guidage selon l'une quelconque des revendications précédentes, **caractérisé en ce que** la partie de support (2) comprend une ou plusieurs zones qui sont adéquates pour être raccordées à un moyen de levage, en particulier une manille, un crochet ou une chaîne en vue du levage du segment et du dispositif.

8. Dispositif de levage et de guidage selon l'une quelconque des revendications précédentes, **caractérisé en ce qu'**il comprend un oeillet (7) au niveau de son côté interne.
